# EUROPEAN PATENT APPLICATION

(11) **EP 1 643 345 A2**
(43) Date of publication of application: **05.04.2006**
(21) Application number: 05250576.5
(22) Date of filing: 02.02.2005
(51) Int. Cl.: G06F 1/16, G06F 1/26

(54) **Portable power supply with computer ports**

(30) Priority: 15.09.2004 CN 200420074173
(71) Applicant: Advanced-Connected Inc., Hsin-Tien, Taipei Hsien (TW)
(72) Inventor: Tian, Yong-Jian, Hsin-Tien, Taipei, Taiwan, R.O.C. (CN); Cao, Zheng-Fang, Hsin-Tien, Taipei, Taiwan, R.O.C. (CN)
(74) Representative: Pratt, David Martin

(57) **Abstract**

Provided is a portable power supply enclosed in a housing including first and second compartments. The power supply comprise a power supply assembly disposed in the second compartment, a rechargeable battery received in the first compartment for supplying power to an electronic device held by the second compartment, a power indicator disposed on a top of the second compartment for displaying remaining power of the power supply assembly, a charging socket disposed in the second compartment for electrically interconnecting to a charger in the power supply assembly, a power socket disposed in the second compartment for connecting to and supplying power to the electronic device, and a plurality of ports disposed on the second compartment, each port adapted to communicate data with an external computer coupled thereto.

## Description

### BACKGROUND OF THE INVENTION

### 1. Field of the Invention

The present invention relates to power supplies and more particularly to a portable power supply such that the power supply can be recharged in an outdoor environment. The present invention further particularly relates to a power supply comprising ports each adapted to couple to a computer (e.g., a portable computer such as notebook) for data communication therewith.

### 2. Description of Related Art

A wide variety of portable electronic products (e.g., cellular phones, PDAs (personal digital assistants), Palmtops, MP3 players, etc.) are available due to technological advancements. These products bring a lot of convenience to our daily life. Typically, a rechargeable battery is provided in the product. For prolonging the operating time of the product after a full charge, the manufacturers have spent much time and money in developing a battery having a larger capacity while trying to decrease the energy consumption of the product. It is understood that a bulky charger is of no use if power of the product is consumed in an outdoor environment. Thus, it is desirable to provide a portable power supply for a portable electronic product and the power supply is provided with ports so as to communicate data with a computer (e.g., notebook).

### SUMMARY OF THE INVENTION

It is an object of the present invention to provide a portable power supply comprising first and second compartments for receiving a rechargeable battery and a power supply assembly. Also, an electronic device is adapted to electrically couple to and be held by the power supply such that it is possible of charging the consumed electronic device by the battery for prolonging its operating time in an outdoor environment. Moreover, a charging of both the power supply assembly and the electronic device can be made by interconnecting a charging socket of the power supply assembly and an external power source via a cord.

It is another object of the present invention to provide a portable power supply having a plurality of computer ports such that the electronic device can communicate data with an external computer via a cable interconnected each of the computer ports and the computer.

It is a further object of the present invention to provide a portable power supply having a power indicator disposed on the second compartment such that a user can easily determine the remaining amount of power of the battery.

To achieve the above and other objects, the present invention provides a portable power supply enclosed in a housing including first and second compartments, comprising a power supply assembly disposed in the second compartment; a rechargeable battery received in the first compartment for supplying power to an electronic device held by the second compartment; a power indicator disposed on a top of the second compartment for displaying remaining amount of power of the power supply assembly; a charging socket disposed in the second compartment for electrically connecting to a charger; a power socket disposed in the second compartment for connecting to and supplying power to the electronic device; and a plurality of ports disposed on the second compartment, each port adapted to communicate data with an external computer coupled thereto.

The above and other objects, features and advantages of the present invention will become apparent from the following detailed description taken with the accompanying drawings.

### BRIEF DESCRIPTION OF THE DRAWINGS

FIG. 1 is a perspective view of a preferred embodiment of portable power supply according to the invention;
FIG. 2 is a view similar to FIG. 1 with a cover of the first compartment removed; and
FIGS. 3 and 4 are two exploded views of the power supply according to the invention.

### DETAILED DESCRIPTION OF THE PREFERRED EMBODIMENTS

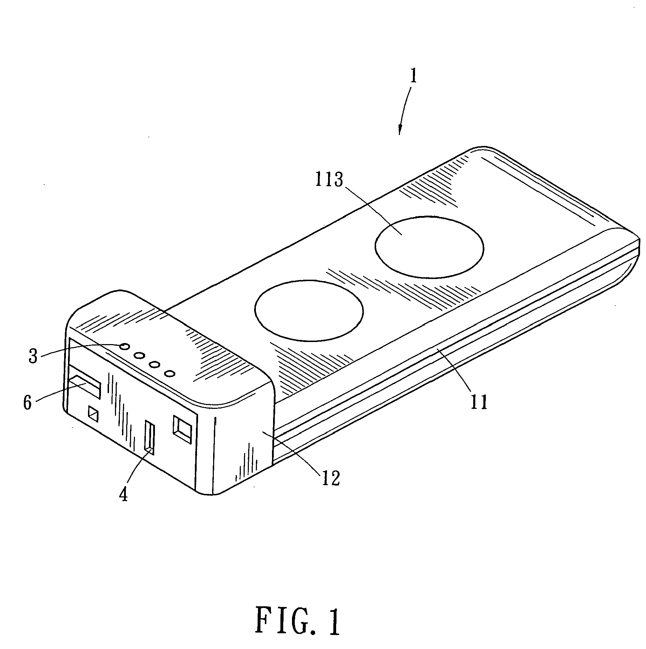

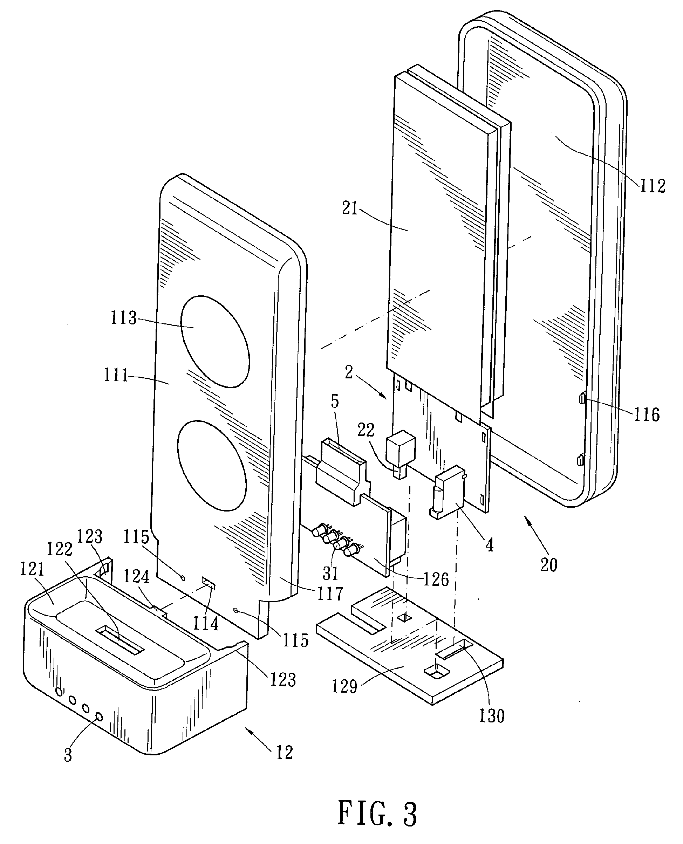

Referring to FIGS. 1 to 4, there is shown a portable power supply constructed in accordance with a preferred embodiment of the invention. The power supply is substantially a parallelepiped comprises a housing 1, a power supply assembly 2, a power indicator 3, a charging socket 4, a power socket 5, and two computer ports 6. Each component will be described in detailed below. The housing 1 comprises a substantially parallelepiped first compartment 11 including a front cover 111 including two oval indentations 113, a slot 114 below the lower one of the indentations 113, and two holes 115 on both sides of the slot 114, and a rear cover 112 longer than the front cover 111, the rear cover 112 including four inner apertures 116 arranged as a rectangle, a substantially parallelepiped second compartment 12 in front of the first compartment 11, the second compartment 12 having a height much less than that of the first compartment 11, a first space 20 defined by the front and rear covers 111 and 112, a rechargeable battery 21 received in the first space 20, and a forward second space 13 confined by the first and the second compartments 11 and 12, a portable electronic device being adapted to mount in the second space 13.

The second compartment 12 comprises a slightly recessed top 121, a rectangular opening 122 on a center of the top 121, two side flanges 123 projected from its rear, the flanges 123 being shaped to conform to sides 117 of the front cover 111, a tab 124 proximate a rear end of the top 121 and formed on an intermediate portion between the flanges 123, the tab 124 adapted to insert into the slot 114 for positioning, an internal space 125 with components such as the power supply assembly 2, the power indicator 3, the power socket 5, and the computer ports 6 contained therein in which the power supply assembly 2 is provided in the rear of the space 125, the power supply assembly 2 being electrically coupled to the battery 21 and having a power switch 22 and the charging socket 4 provided on its end, and a board 126 opposite the power supply assembly 2, the board 126 having its top 127 provided with the power socket 5 and its bottom 128 provided with the computer ports 6. The power indicator 3 is provided on top of the second compartment 12 between the ports 6. The second compartment 12 further comprises a front plate 129 having a plurality of openings 130 with the coupling portions of the ports 6 and the charging socket 4 disposed therein.

As for ports mounted on the second compartment 12, one of them is the charging socket 4 for electrically interconnecting to a charge provided in the power supply assembly 2 and the socket 4 connected to outlet power source via a first cord. Another one is the power socket 5 for connecting to and supplying power to the electronic device via a second cord for its normal operation. Further ones are the ports 6 each adapted to couple to a computer (e.g., notebook) via a cable for data communication therewith.

As the detail descriptions of the power supply assembly 2 has been disclosed in U.S. serial No. 10/920,302, and a brief description will be described below. As stated above, the power supply assembly 2 is provided in the rear of the space 125 and is adapted to supply power to the electronic device. The power supply assembly 2 is also adapted to be charged with the electronic device at same time. The power amount remained in the power supply assembly 2 is shown on the power indicator 3 when the power supply assembly 2 is being charged by an external AC source via the charging socket 4.

The power indicator 3 is provided on top of the second compartment 12. The power indicator 3, as shown in FIGS. 1, 3 and 4, is comprised of a plurality of (four are shown) light-emitting elements which are preferably LEDs (light-emitting diodes) 31. The LEDs 31 are served as a charge indicator of the battery 21. A user may turn on a battery switch to enable the power indicator 3 in which none of the LEDs 31 are lit if the battery 21 is completely consumed, one, two, or three LEDS 31 are lit depending on the remaining power of the battery 21, or four LEDs 31 are lit if the battery 21 is completely charged. This enables a user to easily determine the remaining power of the battery 21.

The charging socket 4 is provided adjacent the bottom of the second compartment 12. The charging socket 4 is implemented as a receptacle having an axial prong the same as a typical socket. For charging the power supply assembly 2, connect a charger (not shown) to a power outlet. Next, plug one end of a cord extended from the charger into the charging socket 4. The power supply assembly 2 starts to charge immediately.

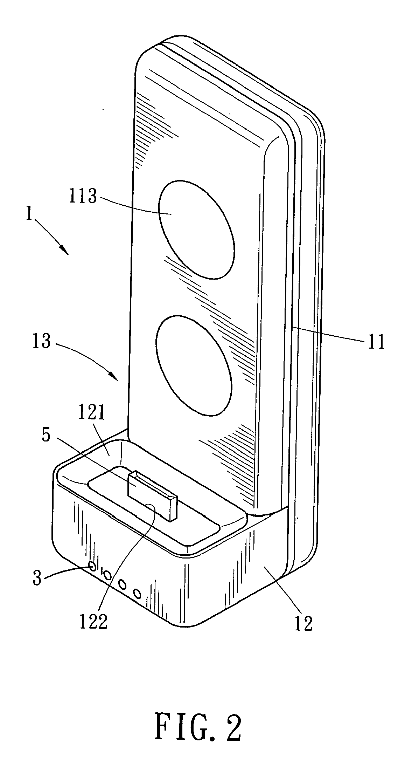

The power socket 5 is adapted to supply power to both the components in the housing 1 and the electronic device. For supplying power from the battery 21 to the consumed electronic device, turn on the power switch 22. The battery 21 starts to supply power to the electronic device immediately such that the electronic device is able to operate another predetermined period of time after being charged. As shown in FIG. 2, the power socket 5 is substantially a parallelepiped. The power socket 5 is disposed vertically and is projected from a base. The power socket 5 has a slightly recessed top. The power socket 5 is further protruded from the top of the second compartment 12. The power socket 5 is substantially the same as a typical port of conventional electronic device. The power socket 5 is adapted to couple to a mated connector at one end of a power cord such that the components in the housing 1 are able to obtain power from the power cord.

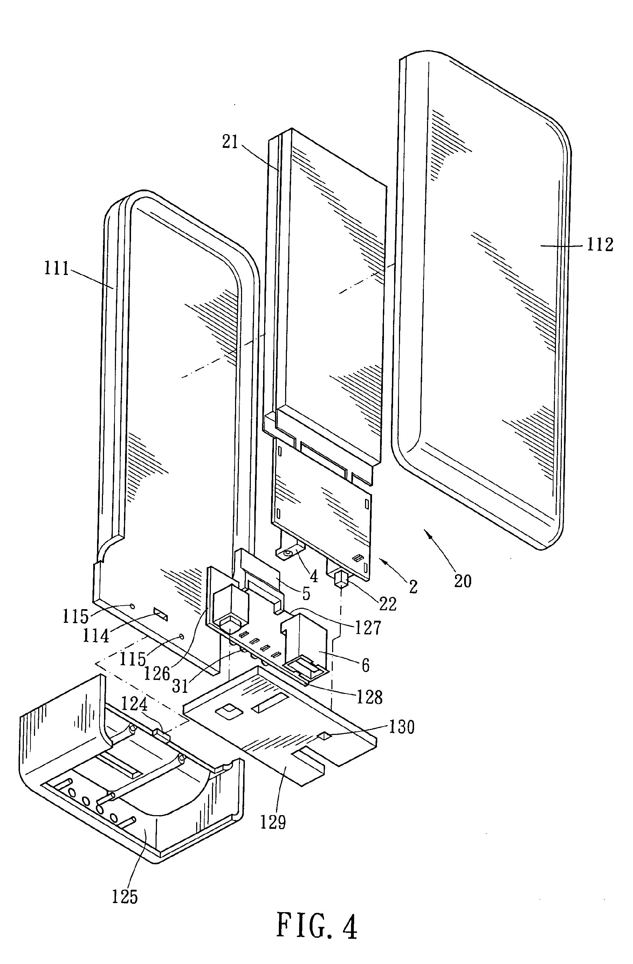

A cable can be interconnected to the port 6 and an external computer (not shown) such that the electronic device can communicate data with the computer. The computer port 6 is implemented as a USB (Universal Serial Bus) port in the embodiment (see FIG. 4).

While the invention herein disclosed has been described by means of specific embodiments, numerous modifications and variations could be made thereto by those skilled in the art without departing from the scope and spirit of the invention set forth in the claims.

## Claims

1. A portable power supply enclosed in a housing including a first and a second compartments, comprising:
a power supply assembly disposed in the second compartment;
a rechargeable battery received in the first compartment for supplying power to an electronic device held by the second compartment;
a power indicator disposed on the second compartment for displaying remaining amount of power of the power supply assembly;
a charging socket disposed in the second compartment for electrically interconnecting to a charger in the power supply assembly;
a power socket disposed in the second compartment for connecting to and supplying power to the electronic device; and
a plurality of ports disposed on the second compartment, each port adapted to communicate data with an external computer coupled thereto.

2. The portable power supply of claim 1, wherein the first compartment comprises a front cover including a plurality of oval indentations, a slot below the lower one of the indentations, a rear cover including a plurality of inner apertures disposed on an edge, and a first space defined by the front and rear covers for receiving the rechargeable battery.

3. The portable power supply of claim 1, wherein the second compartment is extended from a lower portion of a front of the first compartment, the second compartment being substantially a parallelepiped and comprising a slightly recessed top, an opening on a center of the top, two side flanges projected from its rear, a tab proximate a rear end of the top and formed on an intermediate portion between the flanges, and a board opposite the power supply assembly, wherein the second compartment is adapted to enclose the power supply assembly, the power indicator, the power socket, and the computer ports, the power supply assembly is disposed in the rear, the power supply assembly being electrically coupled to the battery and having a power switch and the charging socket disposed on its end, and the board has its bottom disposed with the computer ports.

4. The portable power supply of claim 3, further comprising a forward second space confined by the first and the second compartments.

5. The portable power supply of claim 3, wherein the tab of the second compartment is adapted to insert into the slot of the first compartment for positioning.

6. The portable power supply of claim 3, wherein the power socket is disposed on a top of the board, and the power indicator is disposed between the computer ports.

7. The portable power supply of claim 3, wherein the second compartment further comprises a front plate having a plurality of openings with coupling portions of the ports and the charging socket disposed therein.

8. The portable power supply of claim 6, wherein the power socket is disposed vertically and is projected from its base.

9. The portable power supply of claim 6, wherein the power indicator comprises a plurality of LEDs.
